(19) **Europäisches Patentamt**
**European Patent Office**
**Office européen des brevets**

(11) **EP 1 574 522 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
***C08B 11/00*** *(2006.01)*    ***C08B 11/20*** *(2006.01)*
***C08B 31/00*** *(2006.01)*    ***C08B 31/08*** *(2006.01)*

(21) Anmeldenummer: **05002076.7**

(22) Anmeldetag: **02.02.2005**

(54) **Verfahren zur Herstellung von quellfähigen modifizierten Cellulose-oder Stärkeethern**

Process for the preparation of swellable modified ethers of cellulose and starch

Procédé pour la préparation d'éthers modifiés de cellulose ou d'amidon susceptibles de gonfler dans l'eau

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.02.2004 DE 102004005364**

(43) Veröffentlichungstag der Anmeldung:
**14.09.2005 Patentblatt 2005/37**

(73) Patentinhaber: **Körber, Helmut**
**06114 Halle/S. (DE)**

(72) Erfinder:
• **Körber Helmut**
**06114 Halle/S. (DE)**
• **Pieschel Friedemann**
**61479 Glashütten (DE)**

(74) Vertreter: **Tragsdorf, Bodo**
**Patentanwalt**
**Heinrich-Heine-Strasse 3**
**06844 Dessau (DE)**

(56) Entgegenhaltungen:
**WO-A-03/068823**        **DE-A1- 2 842 857**

• **HEINZE U ET AL: "NEW STARCH PHOSPHATE CARBAMIDES OF HIGH SWELLING ABILITY: SYNTHESIS AND CHARACTERIZATION" STARKE - STARCH, WILEY-VCH, WEINHEIM, DE, Bd. 55, Nr. 2, Februar 2003 (2003-02), Seiten 55-60, XP001143198 ISSN: 0038-9056**

**Beschreibung**

Die Erfindung bezieht sich auf ein Verfahren zur Herstellung von quellfähigen, modifizierten Cellulose- oder Stärkeethern durch Behandlung zumindest teilweise wasserlöslicher Cellulose- oder Stärkeether mit einem Vernetzungsmittel.

Quellfähige oder viskose Lösungen bildende Cellulose- oder Stärkeether haben auf verschiedenen Anwendungsgebieten bereits eine große Bedeutung erlangt.

Durch Wahl des geeigneten Molekulargewichtes der Ausgangs-Stärken bzw. Cellulosen und Art und Substitutionsgrad der Ethergruppen lässt sich die Quellfähigkeit bzw. Viskosität der wässrigen Lösungen der genannten Stoffe beeinflussen. Quellfähige Substanzen, vergleichbar den bekannten Superabsorbern auf Polyacrylsäure-Basis, sind so nicht zugänglich. Auf Kosten der Quellfähigkeit lassen sich zwar durch einen niedrigen Substitutionsgrad DS unter Ausnutzung der intermolekularen Wasserstoffbrückenbindungen nicht substituierter Teile der Kohlehydratketten als Vernetzungsprinzip weitgehend nur quellende Produkte erzeugen, die jedoch den Anforderungen an einen Superabsorber nur begrenzt erfüllen. Da sich die Substituenten auf den Ketten nicht gezielt verteilen lassen, ist ein löslicher Anteil unvermeidlich. Üblicherweise steigt er mit dem DS oder der Quellfähigkeit des nicht löslichen Anteils.

Da die im Hygienesektor und für medizinische Zwecke gebrauchten Absorber auf Polyacrylat-Basis biologisch nicht abgebaut werden und eine vollständige Erfassung und Verbrennung nach dem Gebrauch sehr aufwendig ist, wurden u.a. aus ökologischen Gründen schon mehrere Verfahren zur Modifizierung von Cellulose- oder Stärkeethern zu biologisch abbaubaren, hochquellfähigen Produkten vorgeschlagen. Die Modifizierung erfolgt mittels geeigneter chemischer Vernetzungsmittel.

Aus der DE 26 34 539 C2 und DE 28 42 857 A1 ist es zur Modifizierung von Stärkeethern bekannt, als Vernetzungsmittel ein Mittel einzusetzen, das eine oder mehrere gegenüber Hydroxylgruppen reaktionsfähige funktionelle Gruppen trägt, wie die Acrylamidgruppe, Chlorazomethingruppe, $\alpha$-Halogen-epoxy-gruppe und Allyloxyazomethingruppe, oder Phosphoroxychlorid. Typische Vertreter dieser Verbindungsklassen sind als toxisch oder sogar kanzerogen bekannt, wie die Acrylamide und Cyanurchlorid. Bis auf Cyanurchlorid und Phosphoroxychlorid ist der synthetische Aufwand für mehrere dieser funktionelle Gruppen enthaltenden Stoffe groß. Diese Vernetzungsmittel sind daher teuer und generell toxikologisch bedenklich.

Bekannt ist (DE 196 54 745 C2) Carboxymethyl-Stärke durch Zusatz von Di-, Tri oder Poly-Carbonsäuren in Gegenwart von 10 bis 80 % Wasser bei Temperaturen von 110 bis 180 °C durch Bildung von Esterbrücken zu vernetzen.

Der Zusatz von Wasser erfordert eine aufwendige Verfahrenstechnologie. Die Herstellung von Hygieneartikeln aus diesen Stärken ist problematisch, da durch die Umsetzung mit Carbonsäuren die Gefahr von Hautreizungen besteht. Außerdem kann es bei direktem Körperkontakt zu einer enzymatischen Esterhydrolyse und Freisetzung der Carbonsäuren kommen.

Aus der EP 0 714 913 A1 ist eine Vernetzung von teilveresterter Stärke mit einem Vernetzungsmittel bekannt, das mindestens zwei ungesättigte Gruppen aufweist, wie Divinylsulfon in homogener wässriger Lösung, Hexamethylendiisocyanat in homogener Suspension in einem organischen Lösungsmittel oder Di-, Oligo- oder Polyanhydrid.

Diese Vernetzungsmittel sind kostenaufwendig und einige von diesen sind toxisch. Gemäß der EP 0 714 914 A1 werden quellbare Stärkeester durch Umsetzung mit Carbonsäureanhydriden und Zusatz an Maleinsäureanhydrid als Vernetzungsmittel erhalten. Diese Verfahrensweise erfordert eine sehr gründliche Entfernung von Resten ungebundener Säure.

Der Erfindung liegt die Aufgabe zugrunde, ein Verfahren zur Herstellung von quellfähigen, modifizierten Cellulose- oder Stärkeethern durch Behandlung wasserlöslicher Cellulose- oder Stärkeether mit einem Vernetzungsmittel zu schaffen, das kostengünstig ist und ein Produkt mit verbesserter Quellfähigkeit und hautschonenden Eigenschaften liefert.

Erfindungsgemäß wird die Aufgabe durch die im Anspruch 1 angegebenen Merkmale gelöst. Vorteilhafte Ausgestaltungen und Weiterbildungen sind Gegenstand der Ansprüche 2 bis 7.

Durch eine Behandlung von wasserlöslichen sowie teilweise wasserlöslichen Cellulose- oder Stärkeethern mit Harnstoff bei Temperaturen von 135 bis 150 °C werden hoch quellfähige Produkte mit deutlich weniger löslichen Anteilen erhalten, die vielseitig einsetzbar sind. Durch die Vernetzung mittels Harnstoff wird eine Erhöhung des Gelgehaltes sowie des Wasserrückhaltevermögens der Ausgangsproduktes um das ca. Zwei- bis Vierfache erreicht. Die mit Harnstoff modifizierten Cellulose- oder Stärkeether sind somit bevorzugt als sogenannte Superabsorber geeignet. Bei Anwendungen im Hygienebereich tritt noch der zusätzliche Vorteil ein, dass diese eine besonders gute Hautverträglichkeit besitzen. Bekanntlich wird Harnstoff zu Herstellung von Dermatika eingesetzt.

Als Ausgangsprodukte auf Stärkebasis sind Insbesondere Carboxymethyl-Stärken mit einem DS von 0,1 bis 1,5, Hydroxyethyl-Stärken mit einem DS von 0,2 bis 0,6 sowie einem MS von 0,4 bis 1,5 und Hydroxypropyl-Stärken mit einem DS von 0,1 bis 0,3 sowie einem MS von 0,2 bis 1,5 geeignet.

Als Celluloseether kommen z.B. Carboxymethyl-Cellulose mit einem DS von 0,5 bis 1,5, Hydroxyethyl-Cellulose mit einem DS von 0,85 bis 1,35 sowie einem MS von 1,5 bis 3,0, Hydroxypropyl-Cellulose mit einem DS von 0,1 bis 2,0 sowie einem MS von 4,0 bis 4,5, Methyl-Cellulose mit einem DS von 1,5 bis 2,0 und Ethyl-Cellulose mit einem DS von 1,1 bis 1,4 in Frage.

Die molare Substitution MS ist definiert als durchschnittliche Anzahl von Substituenten pro Anhydroglucoseeinheit (AGU).

Dagegen ist der Substitutionsgrad DS ("degree of substitution") definiert als die durchschnittliche Anzahl der substituierten OH-Gruppen der AGU.

Durch die Umsetzung mit Ethylenoxid bzw. Propylenoxid gewonnene Hydroxyethyl- oder Hydroxypropylderivate können daher einen molaren Substitutionsgrad MS von deutlich über drei haben (wobei der Substitutionsgrad DS sogar unter 1 liegen kann), da bei jedem Reaktionsschritt eine neue reaktionsfähige OH-Gruppe gebildet wird und In Summe Ether mit Polyglykolen entstehen können. Für Methyl-, Ethyl- und Carboxymethylgruppen stehen natürlich nur die drei OH-Gruppen der AGU zur Verfügung, so dass es dort nur einen DS mit dem Maximalwert drei gibt.

Durch die erfindungsgemäße Umsetzung mit Harnstoff können auch klar wasserlösliche Cellulose- bzw. Stärkeether in hochquellfähige Substanzen überführt werden. Die Umsetzung einer klar wasserlöslichen mit Ethylenoxid hydroxyethyllerten, hoch amylosehaltigen Stärke ergibt z.B. ein hoch quellfähiges Produkt mit einem sehr geringen wasserlöslichen Anteil.

Ungeeignet für eine Modifizierung mit Harnstoff sind kationische Stärkeether. Die einzusetzenden Cellulose- und Stärkederivate sollten möglichst trocken sein und als Granulat oder Pulver vorliegen.

Harnstoff wird in handelsüblicher Form, prilliert oder gemahlen, eingesetzt.

Wichtig ist, dass vor der chemischen Umsetzung ein homogenes Gemisch der beiden Ausgangskomponenten Stärke- bzw. Celluloseether und Harnstoff gebildet wird. Harnstoff kann auch als Schmelze eingesetzt werden, die während des Mischvorganges eingesprüht wird.

Die Einsatzmengen an Harnstoff richten sich nach der Anzahl an vorhandenen Anhydroglucoseelnheiten, das Molverhältnis Anhydroglucoseeinhelten (AGU) des Stärke- bzw. Celluloseethers : Harnstoff sollte 1 : 0,5 bis 2 betragen. Ein geringerer Harnstoffzusatz, Molverhältnis kleiner als 1 : 0,5, führt nur zu geringen Verbesserungen hinsichtlich Gelgehalt und WRV, ein höherer Harnstoffzusatz, Molverhältnis größer 1 : 2, verbessert die Gelbildung nicht weiter, führt aber zu einem verstärkten Zusammensintern bei der Umsetzung und muss gegebenenfalls wieder entfernt werden.

Die Zeltdauer der Umsetzung sollte mindestens 30 min und längstens 120 min betragen. Bei kürzeren Reaktionszeiten entfaltet der eingesetzte Harnstoff noch nicht seine volle Wirkung. Versuche haben gezeigt, dass bei einer Reaktionszeit von über 120 min keine weiteren Eigenschaftsverbesserungen mehr eintreten und die Gefahr besteht, dass thermische Schädigungen auftreten.

Die Reaktion kann unter Normaldruck oder auch einem verringerten Druck durchgeführt werden. Letzterer führt zu einer Verkürzung der Reaktionsdauer, wobei jedoch eine Mindestreaktionsdauer von 30 min eingehalten werden sollte.

Nach Beendigung der Umsetzung fällt ein zusammengesintertes Produkt an, das im kalten Zustand spröde und hart ist. Nach einer groben Zerkleinerung kann aus dem Produkt überschüssiger, bei der Umsetzung nicht verbrauchter Harnstoff mit Methanol oder Ethanol extrahiert werden. Eventuelle Rückstände an Harnstoff wirken sich im praktischen Einsatz nicht als Nachteil aus.

Carboxymethyllerte Stärken und Cellulosen können nach Umsetzung mit Harnstoff Immer noch einen Anteil an Ammoniumionen enthalten. Sie lassen sich durch tonenaustausch in üblicher Weise entfernen.

Die modifizierten Endprodukte weisen einen elementaranalytisch nachweisbaren Stickstoff-Gehalt von 0,2 bis 4 % auf, der nicht in Form von Ammoniumionen gebunden ist.

Die erfindungsgemäß hergestellten, modifizierten Stärke- und Celluloseether eignen sich als Nässebinder bei Hygieneartikeln (wie z.B. Windeln), als Löschwasserzusatz gegen vorzeitiges Weglaufen und Versickern, zum Binden umweltgefährdender wässriger Lösungen und zur Feuchteregulierung in Pflanzsubstraten.

Die Erfindung soll nachstehend an einigen Beispielen erläutert werden.

Beispiel 1

100 g Carboxymethylstärke mit einem DS von 1,48 (CMS1) In der neutralen Natriumform wurden mit 21,6 g grob in einer Reibeschale zerkleinertem Harnstoff (HS) vermischt, was einem Molverhältnis von AGU : Harnstoff von 1 : 1 entspricht. Das Gemisch wurde in eine vorgewärmte flache Porzellanschale gegeben und in einem vorgeheizten Trockenschrank unter Normaldruck eine Stunde bei 135 °C behandelt. Nach dem anschließenden Abkühlen außerhalb des Trockenschrankes wurde der gesinterte, spröde Kuchen zerkleinert und mit Methanol kalt extrahiert und getrocknet. Es wurden 102 g modifizierte Carboxymethylstärke als weißes Produkt erhalten.

An diesem wurden die löslichen Anteile (Gelgehalt), das Wasserrückhaltevermögen (WRV) und der Stickstoffgehalt nach folgenden Methoden bestimmt:

Bestimmung der löslichen Anteile (Gelgehalt) und des Wasserrückhaltevermögen (WRV)

Nach genauer Einwaage ("Masse Ausgangsprobe") wird eine Probe mit einem Überschuss destilliertern Wasser übergossen und nach einer Quellzeit von 30 min unter gelegentlichem Schwenken durch Zentrifugieren mit einem Glasfiltertiegel bei 3000-facher Erdbeschleunigung vom Wasserüberschues befreit und der Inhalt gewogen ("Masse Probe nass"). Anschließend wird der Tiegel samt Inhalt In einem Vakuumtrockenschrank bei 100°C getrocknet und der Inhalt erneut gewogen ("Masse Probe trocken").

Gelgehalt:

Der Gelgehalt in % wird wie folgt ermittelt:

$$\text{Gelgehalt} = \text{Masse Probe trocken} \times 100\ \% / \text{Masse Ausgangsprobe.}$$

WRV:

Das WRV In % wird wie folgt ermittelt:

$$\text{WRV} = (\text{Masse Probe nass} - \text{Masse Probe trocken}) \times 100\ \% / \text{Masse Probe trocken.}$$

Bestimmung des Stickstoffgehaltes (N-Gehalt)

Zur Bestimmung des Stickstoffgehaltes, ohne Ammoniumionen mit zu erfassen, wurde eine Probe mehrfach mit einer Lösung von Natriumacetat In einem Methanol-Wasser-Gemisch (Verhältnis 2: 1) gewaschen und abschließend mit dem Lösungsmittelgemisch ohne Natriumacetatgehalt gespült, getrocknet und elementaranalytisch der N-Gehalt ermittelt.

Die ermittelten Ergebnisse sind In der nachfolgenden Tabelle 3 zu den Beispielen 2 bis 7 mit angegeben.

Beispiele 2 bis 7

Verschiedene Stärkeether (jewells 100 g) wurden unter veränderten Verfahrensbedingungen mit unterschiedlichen Mengen an Harnstoff umgesetzt, wobei als Ausgangsstoffe nachfolgend genannte Stärkeether eingesetzt wurden. Zu diesen wurden, soweit möglich, der Gelgehalt und das Wasserrückhaltevermögen bestimmt:

Tabelle 1

| Beispiel | Stärkeether | DS | MS | Gelgehalt (%) | WRV (%) |
|---|---|---|---|---|---|
| 1 bis 4 | Carboxymethylstärke (CMS1) | 1,48 | - | 61 | 1422 |
| 6 | Carboxymethylstärke (CMS2)[1] | 0,28 | - | 89 | 5798 |
| 6 | Hydroxyethylstärke (HES)[2] | 0,25 | 0,55 | | |
| 7 | Hydroxypropylstärke (HPS)[2] | 0,2 | 0,4 | | |

[1] durch Säure- und Temperaturbehandlung gut quellfähiges, kommerzielles Produkt;
[2] dieser Stärkeether ist In kaltem Wasser völlig klar löslich und besitzt keinen Gelanteil; WRV war nicht bestimmbar,

Tabelle 2

Einsatzmengen an Harnstoff (HS) je 100g Stärkeether, Molverhältnis (M) HS : AGU und Verfahrensparameter, wobei unter "R" die Reaktiondauer angegeben ist:

| Beispiel | HS | M | Temp. (°C) | R (min) | Druck (kPa) |
|---|---|---|---|---|---|
| 2 (CMS1) | 43,2 | 2:1 | 135 | 30 | 101,3 |
| 3 (CMS1) | 21,6 | 1:1 | 135 | 120 | 3,3 |
| 4 (CMS1) | 10,8 | 1:2 | 150 | 120 | 3,3 |

(fortgesetzt)

Einsatzmengen an Harnstoff (HS) je 100g Stärkeether, Molverhältnis (M) HS : AGU und Verfahrensparameter, wobei unter "R" die Reaktiondauer angegeben ist:

| Beispiel | HS | M | Temp. (°C) | R (min) | Druck (kPa) |
|---|---|---|---|---|---|
| 5 (CMS2) | 65,1 | 2:1 | 135 | 30 | 101,3 |
| 6 (HES) | 32,2 | 1:1 | 135 | 60 | 101,3 |
| 7 (HPS) | 32,4 | 1:1 | 135 | 60 | 101,3 |

Tabelle 3

Eigenschaftswerte der modifizierten Stärkeether:

| Beispiel | Gelanteil (%) | WRV (%) | N-Gehalt (%) |
|---|---|---|---|
| 1 (CMS1) | 95 | 5930 | 0,77 |
| 2 (CMS1) | 93 | 3518 | 0,42 |
| 3 (CMS1) | 93 | 4920 | 0,55 |
| 4 (CMS1) | 84 | 5082 | 0,69 |
| 5 (CMS2) | 100 | 9470 | 0,48 |
| 6 (HES) | 92 | 8710 | 0,94 |
| 7 (HPS) | 96 | 8233 | 0,99 |

Wie ein Vergleich der Eigenschaften Gelanteil und WRV der eingesetzten Stärkeether vor und nach der Modifizierung zeigt, wird der Gelanteil von 61 % auf 84 bis 95 % erhöht und das WRV steigt um das Doppelte bzw. Dreifache. Im Beispiel 2 ist zu erkennen, dass bereits nach einer kurzen Reaktionsdauer von 30 min ein deutlicher Anstieg des WRV zu verzeichnen ist. Gemäß Beispiel 5 wird als Ausgangsstärke eine Carboxymethylstärke eingesetzt, die bereits aufgrund einer speziellen Vorbehandlung mit Säure und erhöhter Temperatur einen relativ hohen Gelgehalt von 89 % und ein gutes WRV von 5798 % besitzt. Durch die erfindungsgemäße Modifizierung dieser Ausgangsstärke mit Harnstoff im Molverhältnis 2:1 konnte ein deutlich verbessertes Endprodukt erhalten werden, das frei von wasserlöslichen Anteilen ist (Gelgehalt 100 %) und ein höheres WRV von 9470 % besitzt. Die Quell- bzw. Saugfähigkeit dieser Ausgangsstärke konnte somit noch erheblich verbessert werden.

Als Vergleich soll noch aufgezeigt werden, dass die überraschende Verbesserung der Eigenschaften der erfindungsgemäß behandelten Ausgangsstärken nicht auf eine Behandlung bei erhöhter Temperatur zurückzuführen ist. Eine Probe CMS1 wurde ohne Harnstoffzusatz eine Stunde bei 135 °C behandelt und der Gelgehalt und das WRV bestimmt. Die thermisch behandelte Carboxymethylstärke (CMS1) wies einen Gelgehalt von 62 % und ein WRV von 1415 % auf, wobei sich diese Werte im Vergleich zu den Ausgangswerten nur unwesentlich, lediglich im Bereich der Genauigkeit der Meßmethoden, änderten.

Beispiele 8 bis 12

Verschiedene Celluloseether (jeweils 100 g) wurden unter veränderten Verfahrensbedingungen mit unterschiedlichen Mengen an Harnstoff umgesetzt, wobei als Ausgangsstoffe nachfolgend genannte Celluloseether eingesetzt wurden. Zu diesen wurden, soweit möglich, der Gelgehalt und das Wasserrückhaltevermögen bestimmt:

Tabelle 4

| Beispiel | Celluloseether | DS | MS | Gelgehalt (%) | WRV (%) |
|---|---|---|---|---|---|
| 8 | Carboxymethylcellulose (CMC)[1] | 0,7 | | 55 | 675 |
| 9 | Hydroxyethylcellulose (HEC)[2] | 0,95 | 1,7 | 20 | 582 |
| 10 | Hydroxypropylcellulose (HPC)[3] | 1,2 | 4,0 | | |
| 11 | Methylcellulose (MC)[4] | 1,5 | | 28 | 822 |

(fortgesetzt)

| Beispiel | Celluloseether | DS | MS | Gelgehalt (%) | WRV (%) |
|---|---|---|---|---|---|
| 12 | Ethylcellulose (EC)[4] | 1,2 | | 21 | 913 |

1) dieser Celluloseether ist nur teilweise In Wasser löslich;

2) dieser Celluloseether besitzt nur einen Anteil an quellender Substanz 3) dieser Celluloseether ist in kaltem Wasser klar löslich;

4) dieser Celluloseether besitzt einen kleinen Anteil unlöslicher, aber quellender Partikel;

Tabelle 5

Einsatzmengen an Harnstoff (HS) Je 100g Celluloseether, Molverhältnis (M) HS : AGU und Verfahrensparameter, wobei unter "R" die Reaktionsdauer angegeben Ist:

| Beispiel | HS | M | Temp. (°C) | R (mln) | Druck (kPa) |
|---|---|---|---|---|---|
| 8 (CMC) | 27,5 | 1:1 | 135 | 60 | 101,3 |
| 9 (HEC) | 25,3 | 1:1 | 150 | 60 | 101,3 |
| 10 (HPC) | 22,8 | 1:1,5 | 135 | 60 | 101,3 |
| 11 (MC) | 32,8 | 1:1 | 135 | 60 | 3,3 |
| 12 (EC) | 30,7 | 1:1 | 135 | 90 | 101,3 |

Tabelle 6

Eigenschaftswerte der modifizierten Celluloseether:

| Beispiel | Gelanteil (%) | WRV (%) | N-Gehalt (%) |
|---|---|---|---|
| 8 (CMC) | 97 | 7861 | 0,83 |
| 9 (HEC) | 99 | 6120 | 0,53 |
| 10 (HPC) | 94 | 6213 | 0,44 |
| 11 (MC) | 88 | 4984 | 0,33 |
| 12 (EC) | 87 | 411 | 0,39 |

Auch die Modifizierung von Celluloseethern nach der erfindungsgemäßen Verfahrensweise führt zu einer signifikanten Erhöhung des Gelanteils und des WRV. Wie das Beispiel 10 zeigt, können selbst klar wasserlösliche Produkte nahezu quantitativ in gelblldende Endprodukte (94 % Gelanteil) mit einem guten WRV überführt werden.

**Patentansprüche**

1. Verfahren zur Herstellung von quellfählgen, modifizierten Cellulose- oder Stärkeethern durch Behandlung zumindest teilweise wasserlöslicher Cellulose- oder Stärkeether mit einem Vernetzungsmittel, **dadurch gekennzeichnet, dass** den Cellulose- oder Stärkeethern als Vernetzungsmittel Harnstoff in einem Molverhältnis Anhydroglucoseeinhelten (AGU) des Stärke- oder Celluloseethers zu Harnstoff von 1 : 0,5 bis 2 zugesetzt wird, die beiden Komponenten homogen vermischt und anschließend das Gemisch bei Temperaturen von 135 bis 150 °C während einer Reaktionsdauer von 30 bis 120 Minuten umgesetzt wird.

2. Verfahren nach Anspruch 1, **dadurch gekennzeichnet, dass** die Reaktionsführung unter Vakuum erfolgt.

3. Verfahren nach einem der Ansprüche 1 oder 2, **dadurch gekennzeichnet, dass** aus dem erhaltenen Endprodukt, nach grober Zerkleinerung, überschüssiger, nicht umgesetzter Harnstoff mit Methanol oder Ethanol extrahiert wird.

4. Verfahren nach einem der Ansprüche 1 bis 3, **dadurch gekennzeichnet, dass** das Endprodukt nach Entfernung überschüssigen Harnstoffs und gegebenenfalls noch vorhandener Ammoniumionen einen Stickstoffgehalt von 0,2 bis 4 % aufweist.

5. Verfahren nach einem der Ansprüche 1 bis 4, **dadurch gekennzeichnet, dass** der Harnstoff vor der Zugabe in eine Schmelze überführt wird und diese den Cellulose- oder Stärkeethern zugesetzt wird.

6.  Verfahren nach einem der Ansprüche 1 bis 5, **dadurch gekennzeichnet, dass** als Stärkeether Carboxymethyl-Stärken mit einem DS von 0,1 bis 1,5, Hydroxyethyl-Stärken mit einem DS von 0,2 bis 0,6 sowie einem MS von 0,4 bis 1,5 oder Hydroxypropyl-Stärken mit einem DS von 0,1 bis 0,3 sowie einem MS von 0,2 bis 1,5 eingesetzt werden.

7.  Verfahren nach einem der Ansprüche 1 bis 5, **dadurch gekennzeichnet, dass** als Celluloseether Carboxymethyl-Cellulose mit einem DS von 0,5 bis 1,5, Hydroxyethyl-Cellulose mit einem DS von 0,85 bis 1,35 sowie einem MS von 1,5 bis 3,0, Hydroxypropyl-Cellulose mit einem DS von 0,1 bis 2,0 sowie einem MS von 4,0 bis 4,5, Methyl-Cellulose mit einem DS von 1,5 bis 2,0 oder Ethyl-Cellulose mit einem DS von 1,1 bis 1,4 eingesetzt werden.

## Claims

1.  Process for the preparation of swellable, modified ethers of cellulose or starch by treatment of at least partly water soluble ethers of cellulose or starch with a crosslinking agent **characterised in that** urea is added as crosslinking agent to the ethers of cellulose or starch in a molar ratio of anhydroglucoseunit (AGU) of the ethers of starch or cellulose to urea of 1 : 0.5 to 2, both components are mixed homogeneously and the mixture is subsequently reacted at temperatures of 135 to 150 °C at reaction times of 30 to 120 minutes.

2.  Process according to claim 1, **characterised in that** the reaction is carried out under vacuum.

3.  Process according to one of the claims 1 or 2, **characterised in that** the excessiv, not reacted urea is removed from the final product after roughly crushing by extraction with methanol or ethanol.

4.  Process according to one of the claims 1 to 3, **characterised in that** the final product shows a nitrogen content of 0.2 to 4 % after removal of excessiv urea and where appropriate ammonium ions.

5.  Process according to one of the claims 1 to 4, **characterised in that** the urea is converted to a melt before admixture to the ethers of cellulose or starch.

6.  Process according to one of the claims 1 to 5, **characterised in that** as ethers of starch are used carboxymethylated starches with a DS of 0.1 to 1.5, hydroxyethylated starches with a DS of 0.2 to 0.6 and a MS of 0.4 to 1.5 or hydroxypropylated starches with a DS of 0.1 to 0.3 and a MS of 0.2 to 1.5.

7.  Process according to one of the claims 1 to 5, **characterised in that** as ethers of cellulose are used carboxymethylated cellulose with a DS of 0.5 to 1.5, hydoxyethylated cellulose with a DS of 0.85 to 1.35 and a MS of 1.5 to 3.0, hydroxypropylated cellulose with a DS of 0.1 to 2.0 and a MS of 4.0 to 4.5, methylated cellulose with a DS of 1.5 to 2.0 or ethylated cellulose with a DS of 1.1 to 1.4.

## Revendications

1.  Procédé pour la préparation d'éthers modifiés de cellulose ou d'amidon susceptibles de gonfler dans l'eau grâce au traitement des éthers de cellulose ou d'amidon, qui sont au moins en partie solubles dans l'eau, à l'aide d'un agent réticulant, **caractérisé en ce qu'**on ajoute aux éthers de cellulose ou d'amidon de l'urée en guise d'agent réticulant dans un rapport moléculaire d'unités anhydroglucose (AGU) de l'éther d'amidon ou de cellulose par rapport à l'urée de 1:0,5 à 2, les deux composants sont mélangés de façon homogène et, pour finir, le mélange est transformé à des températures comprises entre 135 et 150°C pendant un temps de réaction compris entre 30 et 120 minutes.

2.  Procédé selon la revendication 1, **caractérisé en ce que** la réaction est réalisée sous vide d'air.

3.  Procédé selon l'une quelconque des revendications 1 ou 2, **caractérisé en ce qu'**après un fractionnement grossier, l'urée excédentaire qui n'a pas été transformée est extraite avec du méthanol ou de l'éthanol hors du produit final obtenu.

4.  Procédé selon l'une quelconque des revendications 1 à 3, **caractérisé en ce qu'**après que l'urée excédentaire et éventuellement les ions d'ammonium encore présents aient été enlevés, le produit final présente une teneur en azote comprise entre 0,2 et 4%.

5. Procédé selon l'une quelconque des revendications 1 à 4, **caractérisé en ce qu'**avant d'être rajoutée, l'urée est transformée sous forme de matière fondue qui sera ajoutée aux éthers de cellulose ou d'amidon.

6. Procédé selon l'une quelconque des revendications 1 à 5, **caractérisé en ce qu'**on utilise comme éthers d'amidon des carboxyméthylamidons d'un DS compris entre 0,1 et 1,5, des hydroxyéthylamidons d'un DS compris entre 0,2 et 0,6 ainsi qu'un TSM compris entre 0,4 et 1,5 ou des hydroxypropylamidons d'un DS compris entre 0,1 et 0,3 ainsi que d'un TSM compris entre 0,2 et 1,5.

7. Procédé selon l'une quelconque des revendications 1 à 5, **caractérisé en ce qu'**on utilise comme éthers de cellulose de la carboxyméthylcellulose d'un DS compris entre 0,5 et 1,5, de l'hydroxyéthylcellulose d'un DS compris entre 0,85 et 1,35 ainsi qu'un TSM compris entre 1,5 et 3,0, de l'hydroxypropylcellulose d'un DS compris entre 0,1 et 2,0 ainsi qu'un TSM compris entre 4,0 et 4,5, de la méthylcellulose d'un DS compris entre 1,5 et 2,0 ou de l'éthylcellulose d'un DS compris entre 1,1 et 1,4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2634539 C2
- DE 2842857 A1
- DE 19654745 C2
- EP 0714913 A1
- EP 0714914 A1